## Europäisches Patentamt
## European Patent Office
## Office européen des brevets

(19)

(11) Numéro de publication: **0 060 736**
**B1**

(12) **FASCICULE DE BREVET EUROPEEN**

(45) Date de publication du fascicule du brevet:
14.05.86

(21) Numéro de dépôt: **82400205.9**

(22) Date de dépôt: **05.02.82**

(51) Int. Cl.⁴: **G 01 D 11/24**, G 12 B 9/02

(54) Dispositif de maintien d'un cadran sur un boîtier d'un compteur kilométrique ou analogue.

(30) Priorité: **23.02.81 FR 8103507**

(43) Date de publication de la demande:
**22.09.82 Bulletin 82/38**

(45) Mention de la délivrance du brevet:
**14.05.86 Bulletin 86/20**

(84) Etats contractants désignés:
**BE DE GB IT LU NL**

(56) Documents cités:
**FR - A - 2 449 270**
**US - A - 3 543 586**
**US - A - 3 717 118**
**US - A - 3 972 239**

(73) Titulaire: **HURET ET SES FILS Société dite:, 60 Avenue Félix Faure, F-92000 Nanterre (FR)**

(72) Inventeur: **Huret, Roger, Décédé (FR)**

(74) Mandataire: **Bressand, Georges et al, c/o CABINET LAVOIX 2 Place d'Estienne d'Orves, F-75441 Paris Cedex 09 (FR)**

ACTORUM AG

## Description

L'une des qualités appréciées des petits compteurs kilométriques ou autres destinés aux véhicules à deux roues, ou analogues, est leur faible encombrement. Les efforts effectués dans ce sens ont actuellement permis effectivement de donner au mécanisme de comptage, et par suite au boîtier qui le contient, un volume réduit. Malheureusement le cadran de lecture qui recouvre généralement l'une des extrémités du boîtier a lui aussi une dimension réduite et, dans de nombreux cas, cela rend sa lecture difficile.

Les constructeurs sont donc amenés à réaliser des boîtiers de différents formats et de dimensions variables pour les adapter à chacune de leurs applications, et notamment aux divers types de véhicules, et tenter de concilier dans chaque cas la nécessité d'éviter un trop grand encombrement avec l'exigence de lecture facile du cadran.

Le brevet US-A-3 972 239 décrit, par exemple, un instrument, qui pourrait être un compteur kilométrique, et son assemblage, qui comporte également un cadran et une lentille.

La présente invention a pour but de réduire considérablement et même de supprimer ce problème en permettant de monter des cadrans de diverses dimensions et formes sur un même boîtier, pratiquement standard, et ainsi de monter toujours le cadran le mieux adapté, si grand soit-il, en ne fabriquant qu'un seul type de boîtier.

Cette invention a pour objet un dispositif de maintien d'un cadran sur un boîtier de compteur kilométrique, ou analogue, bordé par une bride périphérique, plus particulièrement destiné à un véhicule à deux roues, ledit compteur comportant également une lunette transparente et un cadran, caractérisé en ce qu'il comporte un adaptateur, de section axiale sensiblement en L, ayant un fond qui est percé d'un orifice de passage du boîtier et est arrêté par ladite bride de ce dernier, ledit adaptateur comportant une collerette périphérique en saillie axiale sur ce fond, qui est munie de moyens d'assemblage par emboîtement, ladite lunette transparente ayant mêmes forme et dimensions en plan que la collerette de l'adaptateur et comportant des moyens d'assemblage par emboîtement coopérant avec ce dernier et un épaulement interne d'appui et de maintien dudit cadran pratiqué sur le pourtour de la lunette, de sorte que le cadran est bloqué et maintenu contre le boîtier lorsque ledit adaptateur et ladite lunette sont assemblés.

Dans ce dispositif, l'adaptateur peut facilement être enfilé sur un boîtier de compteur, ou analogue, et appliqué contre la bride de ce boîtier par l'assemblage de la lunette, le cadran étant serré entre eux. La forme du cadran ne dépend plus que de celle de la collerette de l'adaptateur et de la lunette et peut, par suite, varier sans qu'aucune modification du boîtier ne soit nécessaire.

De la même manière la dimension du cadran n'est nullement liée à celle du boîtier. Le cadran peut d'ailleurs être remplacé, si désiré, le dispositif étant démontable.

Les moyens d'assemblage sont de préférence constitués par une rainure périphérique ménagée dans le bord de l'un des organes et une nervure correspondante formée sur le bord de l'autre organe, entre deux épaulements dont l'un forme l'appui du cadran, les deux épaulements étant décalés en hauteur par rapport au sommet de la nervure.

La lunette est de préférence munie d'une visière à sa partie supérieure.

La description ci-dessous de modes de réalisation donnés à titre d'exemples non limitatifs, et représentés aux dessins annexés, fera mieux comprendre les avantages et caractéristiques de l'invention.

Sur ces dessins:
- la fig. 1 est une vue éclatée d'un compteur et du dispositif de maintien du cadran;
- la fig. 2 est une vue en coupe d'une lunette, suivant la ligne 2–2 de la fig. 3;
- la fig. 3 est une vue en plan de dessus de la lunette de la fig. 2;
- les figs 4 et 5 représentent l'adaptateur, respectivement en coupe suivant la ligne 4–4 de la fig. 5, et en vue de dessus;
- les figs 6, 7 et 8 sont des vues de dessus de trois variantes de réalisation de l'adaptateur;
- la fig. 9 est une vue de côté avec arrachement partiel d'une variante de réalisation de la lunette.

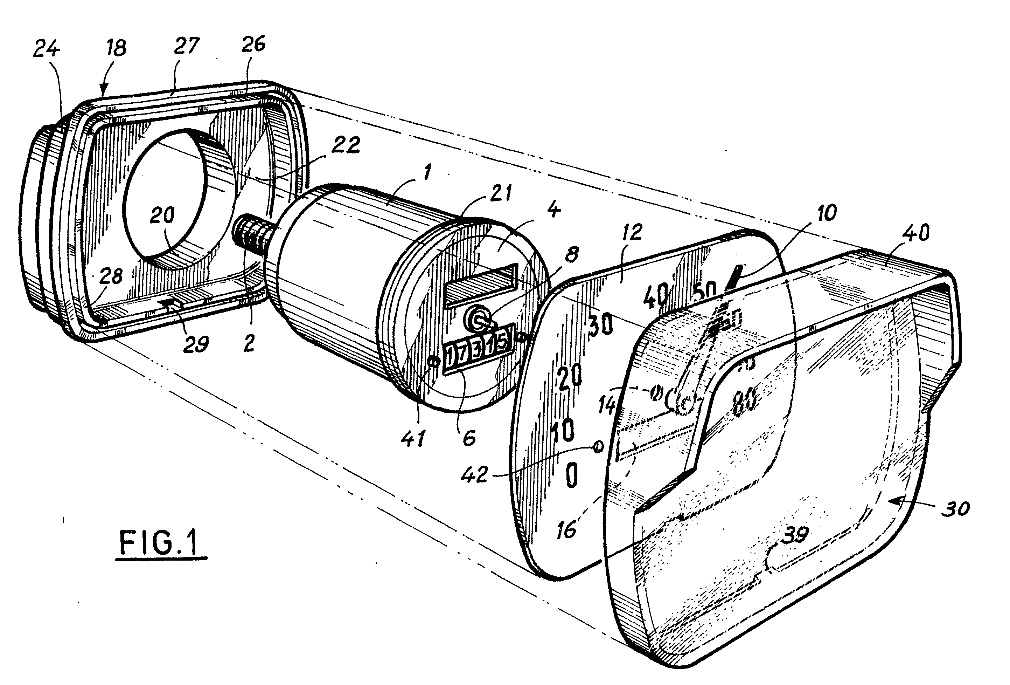

La fig. 1 montre un compteur kilométrique associé à un dispositif de maintien d'un cadran selon l'invention. Le compteur est placé dans un boîtier 1 classique, de forme cylindrique, muni à l'une de ses extrémités d'un raccord 2 permettant sa liaison au dispositif d'entraînement, et à son autre extrémité d'une plaque de fermeture 4. La plaque 4 est percée d'une lumière 6 laissant apparaître les chiffres du compteur de kilomètres et est traversée par une tige 8 d'entraînement d'une aiguille 10 d'indicateur de vitesse.

L'aiguille 10 est destinée à se déplacer sur un cadran 12 portant l'indication des vitesses et percé d'une lumière 16 correspondant à la lumière 6 du boîtier, ainsi que d'un trou central 14 permettant le passage de la tige 8.

Le cadran 12 représenté sur la fig. 1 a une forme sensiblement rectangulaire et une dimension nettement supérieure à celle de la plaque circulaire 4 qui ferme le boîtier 1. Ce cadran est monté sur le boîtier au moyen d'un adaptateur 18 percé d'un trou central 20 dont le diamètre est très légèrement supérieur à celui du boîtier 1, de sorte que l'adaptateur 18 peut librement coulisser sur ce boîtier. Le diamètre du trou 20 est toutefois inférieur à celui d'une bride 21 que porte le boîtier 1, à proximité de la plaque 4.

L'adaptateur a, en direction axiale, une section droite sensiblement en forme de L dont l'une des branches est constituée par le fond 22 qui est percé du trou 20, tandis que son autre branche est formée par une collerette 24 qui fait saillie axialement à partir du fond 22 et comporte à son extrémité libre des moyens d'assemblage par emboîtement. Dans le mode de réalisation représenté les moyens d'assemblage sont constitués par une portion extrême de section en U, qui délimite une rainure 26 entre deux bords, respectivement 27 et 28. Le bord interne 28 a exactement la même dimension et la même forme que le bord du cadran 12, de sorte que celui-ci peut s'appliquer exactement sur lui en laissant libre la rainure 26.

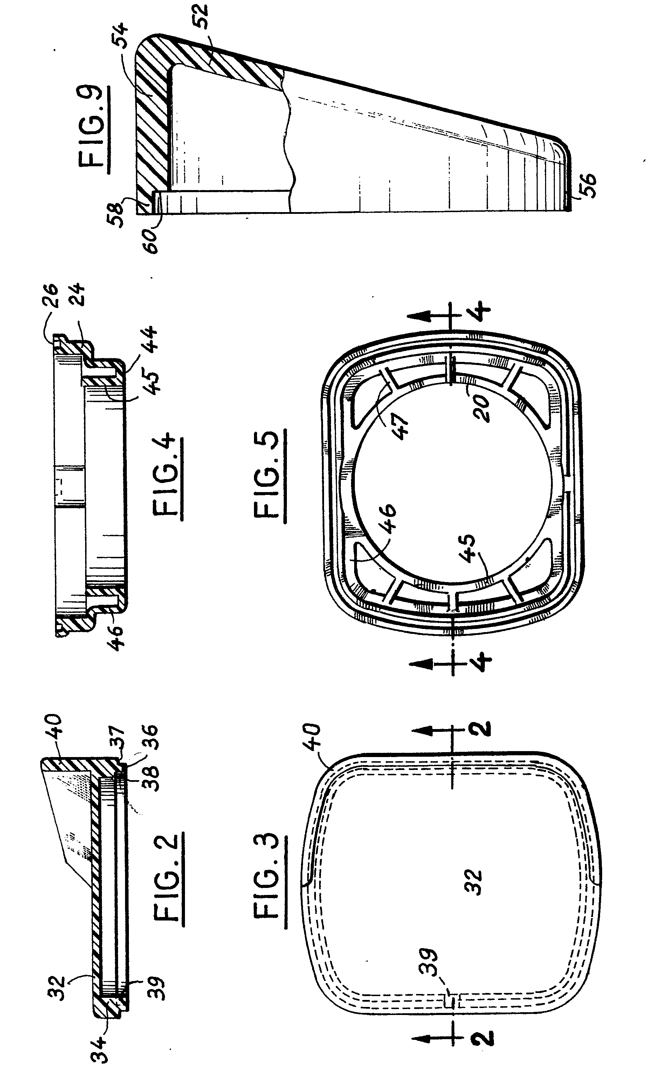

Le dispositif de maintien du cadran comporte également une lunette 30 réalisée en matériau transparent et comportant une plaque plane 32 munie d'un rebord 34 d'où part une nervure 36 permettant l'assemblage de la lunette sur l'adaptateur 18 par emboîtement de cette nervure 36 dans la rainure 26 (fig. 2).

De part et d'autre de la nervure 36 sont formés deux épaulements 37 et 38 décalés en hauteur par rapport à l'extrémité libre de cette nervure, l'épaulement interne 38 étant plus proche de la plaque 32 que l'épaulement externe 37. La différence de profondeur des deux épaulements correspond sensiblement à l'épaisseur du cadran 12 à maintenir et la forme de l'épaulement 38 correspond au contour de ce cadran, de sorte que le cadran appliqué sur le bord 28 se loge dans l'épaulement 38 lors du serrage de la lunette 30 sur l'adaptateur 18 et de leur emboîtement.

Pour faciliter cet assemblage, le bord 28 comporte de préférence une encoche 29 tandis que le bord 34 de la lunette 30 forme un taquet 39 qui vient s'emboîter dans l'encoche 29 ainsi d'ailleurs que dans une encoche analogue prévue sur le bord du cadran 12.

La lunette 30 est complétée à sa partie supérieure par une visière 40 qui fait saillie vers l'extérieur et se prolonge sur une partie des deux côtés latéraux incurvés de cette lunette, de façon à protéger la surface plane 32 de celle-ci et à faciliter la lecture du cadran.

Il est clair que le cadran peut facilement être mis en place sur le compteur ou démonté pour être remplacé. Lors du montage, l'adaptateur 18 est enfilé sur le boîtier 1 jusqu'au moment où son fond 22 vient buter contre la bride 21 de ce boîtier. La hauteur de la collerette 24 est supérieure à celle de la bride 21, de sorte que les éléments d'assemblage font saillie au-delà du boîtier. Le cadran 12 est alors placé sur le bord 28 en étant centré par rapport à ce bord, au moyen de la tige 8 traversant le trou central 14 et éventuellement au moyen d'ergots 41 portés par la plaque 4 et traversant des trous 42 de l'écran. La lunette 30 est alors emboîtée sur l'adaptateur 18 et bloque le cadran 12 ainsi que la bride 21 entre elle et cet adaptateur.

Dans cette position le dispositif de maintien du cadran est immobilisé par rapport au boîtier 1 dont il est rendu complètement solidaire. Les indications portées par le cadran sont facilement lisibles à travers la lunette 30.

Bien entendu le dispositif peut à tout moment être démonté en séparant la lunette et l'adaptateur, ce qui permet de le remplacer par un autre dispositif, ou éventuellement simplement de l'entretenir.

L'adaptateur représenté sur la fig. 1 comporte un fond 22 qui est plein, mais il est bien évident que le fond 22 peut, si nécessaire, être évidé. Il peut par exemple être réalisé, comme le montrent les figs 4 et 5, par un élément de section en U 44, dont la branche interne 45 entoure le trou 20 de passage du boîtier 1 tandis que sa branche externe 46 porte la collerette 24 munie de la rainure d'emboîtement 26. Les deux branches 45 et 46 du U sont de préférence reliées entre elles par un certain nombre de bras radiaux 47 qui assurent une résistance suffisante à l'adaptateur.

Lorsque le cadran doit avoir une forme sensiblement rectangulaire, comme celle représentée sur les figs 1 et 5, la couronne 45 formée par la branche du U 44 qui délimite le trou 20 peut, par exemple, être sensiblement tangente à la collerette 24, comme le montre la fig. 5, seules les deux parties latérales étant alors évidées.

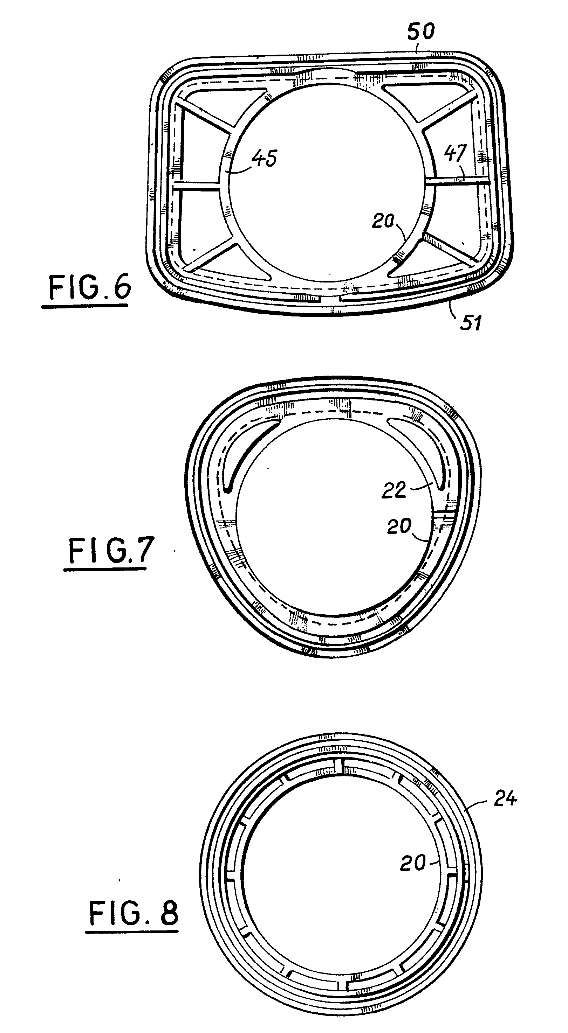

Il en est de même lorsque le cadran, la collerette et la lunette ont une forme trapézoïdale, telle que celle de l'adaptateur représenté sur la fig. 6. Un tel adaptateur comporte en effet, de part et d'autre de la couronne 45 ou du trou 20, un bord supérieur 50 rectiligne et un bord inférieur 51 incurvé, qui sont reliés par des côtés de plus faible dimension, et un fond qui peut être plein ou évidé comme celui de la fig. 5.

L'adaptateur peut également avoir une forme circulaire ou même triangulaire, comme le montrent respectivement les figs 8 et 7. Il peut également avoir toute autre forme, selon la dimension désirée pour le cadran, ainsi que la place disponible au point d'utilisation.

Bien entendu la lunette a une forme correspondante et comporte de préférence une visière analogue à la visière 40 des figs 2 et 3.

Selon une variante de réalisation, la lunette peut toutefois comporter, comme le montre la fig. 9, une plaque inclinée 52 munie d'un rebord 54, qui est large à sa partie supérieure et court en 56 à sa partie inférieure, ce rebord comportant des moyens d'assemblage sur l'adaptateur. Dans ce cas le bord supérieur large, 54, joue le rôle de la visière tandis que la plaque 52 permet la lecture du cadran.

Les moyens d'assemblage peuvent être ceux qui ont été décrits, c'est-à-dire être constitués par une nervure entre deux épaulements, ou au contraire être constitués, comme le montre la fig. 9, par une nervure périphérique 58 entourant un épaulement interne 60. Dans un tel cas l'adaptateur est, lui, muni d'une nervure d'emboîtement contre l'épaulement 60, entre deux épaulements, et a par suite une forme analogue à celle du rebord 34 de la lunette de la fig. 2.

Un tel adaptateur s'emboîte sur la lunette en maintenant entre eux le cadran, de la même manière que les adaptateurs et lunettes des modes de réalisation précédemment décrits, de sorte que dans ce cas également le cadran est maintenu avec sécurité sur le boîtier mais peut être démonté chaque fois que cela est désiré.

La lunette représentée sur la fig. 9 peut avoir toute forme désirée, rectangulaire, trapézoïdale, circulaire, triangulaire, ou autre, et ainsi être adaptée à diverses utilisations.

Le dispositif de l'invention permet donc d'assembler sur des boîtiers de compteurs de types standards ayant tous une forme analogue et présentant un encombrement aussi faible que possible, des cadrans de formes diverses qui peuvent être suffisamment grands pour permettre une lecture facile et en même temps avoir une forme qui correspond à l'emplacement disponible.

**Revendications**

1. Dispositif de maintien d'un cadran sur un boîtier (1) de compteur kilométrique, ou analogue, bordé par une bride périphérique (21), plus particulièrement destiné à un véhicule à deux roues, ledit compteur comportant également une lunette transparente (30) et un cadran (12), caractérisé en ce qu'il comporte un adaptateur (18), de section axiale sensiblement en L, ayant un fond (22) qui est percé d'un orifice (20) de passage du boîtier et est arrêté par ladite bride (21) de ce dernier, ledit adaptateur comportant une collerette périphérique (24) en saillie axiale sur ce fond, qui est munie de moyens d'assemblage par emboîtement (26), ladite lunette transparente (30) ayant mêmes forme et dimensions en plan que la collerette (24) de l'adaptateur et comportant des moyens d'assemblage (36) par emboîtement coopérant avec ce dernier et un épaulement interne (38) d'appui et de maintien dudit cadran (12) pratiqué sur le pourtour de la lunette, de sorte que le cadran (12) est bloqué et maintenu contre le boîtier lorsque ledit adaptateur et ladite lunette sont assemblés.

2. Dispositif suivant la revendication 1, caractérisé en ce que les moyens d'assemblage de l'adaptateur et de la lunette comportent une rainure périphérique (26, 60) ménagée sur le pourtour dudit adaptateur ou de ladite lunette, et une nervure complémentaire (36) délimitée sur la face en regard de l'autre organe, la lunette ou l'adaptateur, entre deux épaulements (37, 38) décalés axialement l'un par rapport à l'autre, dont l'un forme un appui pour le cadran (12).

3. Dispositif suivant l'une des revendications 1 et 2, caractérisé en ce que la lunette (30) comporte, de part et d'autre d'une face plane, une visière (40) en saillie vers l'extérieur et un rebord (34) portant les moyens d'assemblage.

4. Dispositif suivant l'une des revendications 1 et 2, dans lequel la lunette (30) comporte une face plane transparente (52) munie d'un rebord (54, 56) portant les moyens d'assemblage (58, 60) à son extrémité libre, caractérisé en ce que la profondeur du rebord (54, 56) varie et est plus importante à la partie supérieure de la lunette qu'à sa partie inférieure.

5. Dispositif suivant l'une des revendications 1 à 4, caractérisé en ce que l'adaptateur (18) comporte un fond plein (22) qui est percé de l'orifice (20) de passage du boîtier et porte la collerette périphérique (24).

6. Dispositif suivant l'une des revendications 1 à 4, caractérisé en ce que l'adaptateur (18) comporte, autour de l'orifice (20) de passage du boîtier, une paroi évidée (44).

7. Dispositif suivant l'une des revendications 1 à 6, caractérisé en ce que la forme en plan de la collerette de l'adaptateur (18), du rebord de la lunette (30) et du cadran (12) est quadrangulaire, triangulaire, ronde, trapézoïdale, ou analogue.

**Claims**

1. A device for maintaining a dial on a housing (1) of a kilometer or like recorder, surrounded by a peripheral flange (21), more particularly intended for a two-wheeled vehicle, said recorder further comprising a transparent window (30) and a dial (12), characterised in that it comprises an adaptor (18) having a substantially L-shaped section and an end wall (22) which is provided with an opening (20) for the passage of the housing and is stopped by said flange (21) of the latter, said adaptor comprising a peripheral collar (24) which axially projects from said end wall and is provided with a fitting-together assembling means (26), said transparent window (30) having the same shape and dimensions in plan as the collar (24) of the adaptor and including fitting-together assembling means (36) cooperating with the adaptor and an inner shoulder (38) against which said dial (12) is supported and maintained and which is formed on the periphery of the window so that the dial (12) is blocked and maintained against the housing when said adaptor and said window are assembled.

2. A device according to claim 1, characterised in that the assembling means of the adaptor and window comprise a peripheral groove (26, 60) formed on the periphery of said adaptor or said window, and a complementary rib (36) defined on the confronting face of the other element, namely the window or the adaptor, between two shoulders (36, 38) which are axially offset with respect to each other and one of which forms a support for the dial (12).

3. A device according to one of the claims 1 and 2, characterised in that the window (30) comprises, on each side of a planar side, a visor (40) projecting outwardly and a ledge (34) carrying said assembling means.

4. A device according to one of the claims 1 and 2, in which the window (30) comprises a transparent planar side (52) provided with a ledge (54, 56) carrying the assembling means (58, 60) at its free end, characterised in that the depth of the ledge (54, 56) varies and is greater in the upper part of the window than in its lower part.

5. A device according to one of the claims 1 to 4, characterised in that the adaptor (18) has a solid end wall (22) which is provided with an opening (20) for the passage of the housing and carries the peripheral collar (24).

6. A device according to one of the claims 1 to 4, characterised in that the adaptor (18) has a hollowed-out wall (44) around the opening (20) for the passage of the housing.

7. A device according to one of the claims 1 to 6, characterised in that the shape in plan of the collar of the adaptor (18), of the ledge of the window (30) and of the dial (12) has a quadrangular, triangular, round, trapezoidal or like shape.

**Patentansprüche**

1. Einrichtung zum Befestigen des Ziffernblattes am Gehäuse (1) eines Kilometerzählers oder dergleichen, welches mit einem Umfangsflansch (21) umgeben ist und insbesondere für ein Zweiradfahrzeug bestimmt ist, wobei der Kilometerzähler ausserdem ein transparentes Sichtfenster (30) und ein Ziffernblatt (12) aufweist, dadurch gekennzeichnet, dass die Einrichtung ein Adapterteil (18) aufweist, welches in einem Axialschnitt im wesentlichen L-förmig ist mit einem Boden (22), welcher mit einer Öffnung (20) zum Durchtritt des Gehäuses (1) versehen ist und an dem Umfangsflansch (21) des letzteren zur Anlage kommt, wobei das Adapterteil (18) einen von dem Boden in axialer Richtung abstehenden Umfangsrand (24) aufweist, welcher mit Mitteln (26) für eine Einsteckverbindung versehen ist, wobei ferner das transparente Sichtfenster (30) im Grundriss gleiche Form und Abmessungen aufweist wie der Umfangsrand (24) des Adapterteils (18) und mit Mitteln (36) für eine Einsteckverbindung versehen ist, welche mit dem Umfangsrand (24) zusammenwirken, sowie mit einer Innenschulter (38) zur Abstützung und Halterung des Ziffernblattes (12), die im Umfangsbereich des Sichtfensters (30) ausgebildet ist, derart, dass das Ziffernblatt (12) fixiert und gegen das Gehäuse (1) gehalten wird, wenn das Adapterteil (18) und das Sichtfenster (30) zusammengebaut sind.

2. Einrichtung nach Anspruch 1, dadurch gekennzeichnet, dass die Mittel für eine Einsteckverbindung des Adapterteils (18) und des Sichtfensters (30) eine Umfangsnut (26, 60) umfassen, die jeweils im Umfangsbereich des Adapterteils (18) oder des Sichtfensters (30) ausgebildet sind, sowie eine komplementäre Rippe (36) an der dem jeweils anderen Teil, nämlich dem Sichtfenster oder dem Adapterteil, zugewandten Fläche zwischen zwei axial gegeneinander versetzten Schultern (37, 38), deren eine als Stützfläche für das Ziffernblatt (12) dient.

3. Einrichtung nach Anspruch 1 oder 2, dadurch gekennzeichnet, dass das Sichtfenster (30) auf einer Seite der ebenen Fläche eine Blende (40) aufweist, welche nach aussen vorspringt, und auf der anderen Seite ein Randsims (34), welches die Mittel für die Einsteckverbindung trägt.

4. Einrichtung nach einem der Ansprüche 1 oder 2, bei welcher das Sichtfenster (30) eine ebene, transparente Fläche (52) aufweist, die mit einem an seinem freien Ende die Mittel (58, 60) für die Einsteckverbindung tragenden Randsims versehen ist, dadurch gekennzeichnet, dass die Tiefe des Randsims (54, 56) variiert und im oberen Bereich des Sichtfensters grösser ist als in deren unterem Bereich.

5. Einrichtung nach einem der Ansprüche 1 bis 4, dadurch gekennzeichnet, dass das Adapterteil (18) einen durchgehenden Boden (22) aufweist, welcher mit einer Öffnung (20) zum Durchtritt des Gehäuses (1) versehen ist und den Umfangsrand (24) trägt.

6. Einrichtung nach einem der Ansprüche 1 bis 4, dadurch gekennzeichnet, dass das Adapterteil (18) um die Öffnung (20) zum Durchtritt des Gehäuses herum eine mit Ausnehmungen versehene Wand (44) aufweist.

7. Einrichtung nach einem der Ansprüche 1 bis 6, dadurch gekennzeichnet, dass die Grundrissform des Umfangsrandes des Adapterteils (18), des Randsimses des Sichtfensters (30) und des Ziffernblattes (12) viereckig, dreieckig, rund, trapezförmig oder dergleichen ist.

FIG.1

FIG. 2

FIG. 3

FIG.4

FIG.5

FIG.9

**FIG.6**

**FIG.7**

**FIG. 8**